# EUROPEAN PATENT APPLICATION

(11) **EP 4 819 674 A1**
(43) Date of publication of application: **07.10.2026**
(21) Application number: 23959727.1
(22) Date of filing: 28.11.2023
(51) Int. Cl.: H04W 24/08

(54) **DOWNLINK SIGNAL MONITORING METHOD, SENDING METHOD, APPARATUS AND DEVICE, AND STORAGE MEDIUM**

(71) Applicant: GUANGDONG OPPO MOBILE TELECOMMUNICATIONS CORP., LTD., Dongguan, Guangdong 523860 (CN)
(72) Inventor: LI, Haitao, Dongguan, Guangdong 523860 (CN); HU, Yi, Dongguan, Guangdong 523860 (CN)
(74) Representative: RGTH
(86) International application number: PCT/CN2023/134759
(87) International publication number: WO 2025/111804

(57) **Abstract**

The present application relates to the field of mobile communications. Disclosed are a downlink signal monitoring method, a sending method, an apparatus and a device, and a storage medium. The method comprises: when transitioning from a first monitoring state to a second monitoring state, monitoring a downlink signal on a first search space and/or a first SSSG of a serving cell of a terminal, wherein the terminal is in an RRC connection state, and the power consumption of the first monitoring state is lower than that of the second monitoring state. According to the present application, the resource used for monitoring a downlink signal when a terminal in an RRC connection state transitions a monitoring state is specified.

## Description

### TECHNICAL FIELD

The present application relates to the field of mobile communications, and more specifically, to a downlink signal monitoring method, a downlink signal transmitting method, an apparatus, a device, and a storage medium.

### BACKGROUND

A network device may configure multiple search space set groups (SSSG) for a terminal. The terminal uses an SSSG corresponding to intensive monitoring occasions to monitor a physical downlink control channel (PDCCH), which may achieve more timely scheduling and reduce service latency. However, the terminal uses an SSSG corresponding to sparse monitoring occasions to monitor a PDCCH, which may achieve power saving for the terminal.

When the terminal is in a low-power reception state, it activates a main radio only after receiving a low power-wake up signal (LP-WUS) to monitor downlink signals, thereby achieving power saving. The specific implementations for waking up the main radio to monitor the PDCCH require further discussion and research.

### SUMMARY

The present application provides a downlink signal monitoring method, a downlink signal transmitting method, an apparatus, a device, and a storage medium. The technical solutions are as follows.

According to one aspect of the present application, a downlink signal monitoring method is provided. The method is performed by a terminal and includes:
in response to switching from a first monitoring state to a second monitoring state, monitoring a downlink signal on a first search space and/or a first search space set group (SSSG) of a serving cell of the terminal;
where the terminal is in a radio resource control (RRC) connected state, and power consumption of the first monitoring state is lower than power consumption of the second monitoring state.

According to another aspect of the present application, a downlink signal transmitting method is provided. The method is performed by a network device and includes:
in response to a terminal switching from a first monitoring state to a second monitoring state, transmitting a downlink signal on a first search space and/or a first search space set group (SSSG) of a serving cell of the terminal;
where the terminal is in a radio resource control (RRC) connected state, the first search space and/or the first SSSG are used by the terminal to monitor the downlink signal, and power consumption of the first monitoring state is lower than power consumption of the second monitoring state.

According to another aspect of the present application, a downlink signal monitoring apparatus is provided, and the apparatus includes:
a receiving module, configured to monitor a downlink signal on a first search space and/or a first search space set group (SSSG) of a serving cell of a terminal in response to switching from a first monitoring state to a second monitoring state;
where the terminal is in a radio resource control (RRC) connected state, and power consumption of the first monitoring state is lower than power consumption of the second monitoring state.

According to another aspect of the present application, a downlink signal transmitting apparatus is provided, and the apparatus includes:
a transmitting module, configured to transmit a downlink signal on a first search space and/or a first search space set group (SSSG) of a serving cell of a terminal in response to the terminal switching from a first monitoring state to a second monitoring state;
where the terminal is in an RRC connected state, the first search space and/or the first SSSG are used by the terminal to monitor the downlink signal, and power consumption of the first monitoring state is lower than power consumption of the second monitoring state.

According to another aspect of the present application, a terminal is provided, and the terminal includes: a processor; a transceiver connected to the processor; a memory configured to store executable instructions of the processor; where the terminal is configured to load and execute the executable instructions to perform the downlink signal monitoring method in the above aspects.

According to another aspect of the present application, a network device is provided, and the network device includes: a processor; a transceiver connected to the processor; a memory configured to store executable instructions of the processor; where the network device is configured to load and execute the executable instructions to perform the downlink signal transmission method in the above aspects.

According to another aspect of the present application, a computer-readable storage medium is provided, which has executable instructions stored thereon, when the executable instructions are loaded and executed by a processor, the downlink signal monitoring method or the downlink signal transmitting method in the above aspects is implemented.

According to another aspect of the present application, a chip is provided. The chip includes programmable logic circuitry and/or program instructions. When the chip is executed on a computer device, the chip is configured to, based on the programmable logic circuitry and/or the program instructions, perform the downlink signal monitoring method or the downlink signal transmitting method in the above aspects.

According to still another aspect of the present application, a computer program product or a computer program is provided. The computer program product or the computer program includes computer instructions stored on a computer-readable storage medium. The computer instructions, when read and executed by a processor of a computer device from the computer-readable storage medium, enable the computer device to perform the downlink signal monitoring method or the downlink signal transmitting method in the above aspects.

The technical solutions provided by the embodiments of the present application at least include the following beneficial effects.

For a terminal in an RRC connected state, in response to switching from a first monitoring state to a second monitoring state with higher power consumption, the terminal may monitor the downlink signal on a first search space and/or a first SSSG of a serving cell, thereby clarifying the resources used by the terminal to monitor the downlink signal (e.g., PDCCH). This helps ensure that the terminal and the network device maintain a consistent understanding of the monitoring behavior for the downlink signal, to avoid the terminal from missing the downlink signal transmitted by the network device, and also avoid unnecessary resource overhead caused by the network device transmitting the downlink signal on resources not monitored by the terminal.

### BRIEF DESCRIPTION OF THE DRAWINGS

To more clearly illustrate the technical solutions in the embodiments of the present application, the following will briefly introduce the accompanying drawings used in the description of the embodiments. Obviously, the accompanying drawings in the following description are merely some embodiments of the present application, for those of ordinary skill in the art, other drawings can be obtained from these drawings without creative effort.
FIG. 1 is a schematic diagram of a receiver system provided by an exemplary embodiment of the present application.
FIG. 2 is a schematic diagram of a system architecture of a communication system provided by an exemplary embodiment of the present application.
FIG. 3 is a flowchart of a downlink signal monitoring method provided by an exemplary embodiment of the present application.
FIG. 4 is a flowchart of a downlink signal transmitting method provided by an exemplary embodiment of the present application.
FIG. 5 is a flowchart of a downlink signal monitoring method provided by an exemplary embodiment of the present application.
FIG. 6 is a schematic diagram of a PDCCH monitoring procedure provided by an exemplary embodiment of the present application.
FIG. 7 is a flowchart of a downlink signal monitoring method provided by an exemplary embodiment of the present application.
FIG. 8 is a schematic diagram of a PDCCH monitoring procedure provided by an exemplary embodiment of the present application.
FIG. 9 is a flowchart of a downlink signal monitoring method provided by an exemplary embodiment of the present application.
FIG. 10 is a schematic diagram of a PDCCH monitoring procedure provided by an exemplary embodiment of the present application;
FIG. 11 is a block diagram of a downlink signal monitoring apparatus provided by an exemplary embodiment of the present application.
FIG. 12 is a block diagram of a downlink signal transmitting apparatus provided by an exemplary embodiment of the present application.
FIG. 13 is a structural schematic diagram of a communication device provided by an exemplary embodiment of the present application.

### DETAILED DESCRIPTION

To make the objectives, technical solutions, and advantages of the present application clearer, the embodiments of the present application will be described in further detail below with reference to the accompanying drawings. Here, exemplary embodiments will be described in detail, examples of which are illustrated in the accompanying drawings. When the following description refers to the drawings, unless otherwise indicated, the same reference numbers in different drawings represent the same or similar elements. The implementations described in the following exemplary embodiments do not represent all implementations consistent with the present application. On the contrary, they are merely examples of apparatuses and methods consistent with some aspects of the present application as detailed in the appended claims.

The term used in the present disclosure is for the purpose of describing particular embodiments only and is not intended to limit the present disclosure. The singular forms "a", "the", and "this" used in the present application and the appended claims are further intended to include plural forms, unless the context clearly indicates otherwise. It should also be understood that, the term "and/or" used herein refers to and encompasses any and all possible combinations of one or more associated listed items.

It should be understood that, in the present application, although terms such as first, second, and third may be used to describe various information, such information should not be limited by these terms. These terms are merely used to distinguish information belonging to the same type from one another. For example, without departing from the scope of the present application, first information may also be referred to as second information, and similarly, the second information may also be referred to as the first information. Depending on the context, the word "if" as used herein may be interpreted as "in a case where", "when", or "in response to determining".

Firstly, some terms involved in the embodiments of the present application are described as follows.

### Introduction to new radio (New Radio, NR):

Currently, with the pursuit of speed, latency, high mobility, energy efficiency, and the diversity and complexity of services in the future life, the 3rd generation partnership project (3GPP) international standards organization has begun researching and developing the 5th generation mobile communication technology (5G). The main application scenarios of 5G includes: enhanced mobile broadband (eMBB), ultra reliable low latency communication (URLLC), and massive machine type of communication (mMTC).

eMBB still aims for users to obtain multimedia content, services, and data, which demand growing rapidly. And since eMBB may be deployed in different scenarios, such as indoor, urban area, rural area, its capabilities and requirements vary significantly it cannot be generalized and should be analyzed in detail based on specific deployment scenarios. Typical applications of URLLC include: industrial automation, electric power automation, remote medical operation (surgery), and traffic safety assurance. Typical characteristics of mMTC include: high connection density, small data volume, delay-insensitive services, low-cost modules, and long service life.

5G NR may further be deployed independently. In the 5G network environment, in order to reduce radio signaling, and quickly resume wireless connection and data services, a new RRC state has been defined, that is, an RRC inactive (INACTIVE) state. This state is different from an RRC idle (IDLE) state and an RRC active (ACTIVE) state.

RRC idle (IDLE) state: mobility is terminal-based cell selection and reselection, paging is initiated by a core network (CN), and a paging area is configured by the CN. There is no terminal access stratum (AS) context on a base station side. There is no RRC connection.

RRC connected (CONNECTED) state: There is an RRC connection, and both the base station and the terminal have terminal AS context. The location of the terminal known to the network side is at specific cell level. Mobility is controlled by the network side. Unicast data may be transmitted between the terminal and the base station.

RRC inactive (INACTIVE) state: Mobility is terminal-based cell selection and reselection, there is a connection between the CN and NR, the terminal AS context is stored on a base station, paging is triggered by a radio access network (RAN), a RAN-based paging area is managed by the RAN, and the location of the terminal known to the network side is at a RAN-based paging area level.

### Introduction to terminal power-saving mechanism:

3GPP has researched power-saving schemes for a connected-state terminal configured with discontinuous reception (DRX), including schemes of reducing blind detection of PDCCH of the terminal. One method is to control PDCCH monitoring behavior of the terminal through a SSSG switching mechanism, that is, the network configures multiple SSSGs (e.g., 2 or 3 SSSGs) for the terminal, where some SSSGs correspond to denser PDCCH monitoring occasions, while others SSSGs correspond to sparser PDCCH monitoring occasions. Using SSSGs corresponding to dense monitoring occasions to monitor PDCCH enables more timely scheduling and reduces service latency, while using SSSGs corresponding to sparse monitoring occasions to monitor PDCCH achieves power saving for the terminal.

SSSG switching may be implemented through an explicit indication via a network. The network may indicate which SSSG the terminal uses to monitor the PDCCH by transmitting dynamic signaling. Generally, based on downlink service requirements of the terminal and uplink service requirement indications reported via a buffer status report (BSR) by the terminal, when the network determines there is no urgent uplink or downlink data transmission requirements in the coming period, the network may indicates that the terminal uses a sparse SSSG to monitor the PDCCH, thereby achieving power saving. As a general principle, when the terminal receives an SSSG switching indication, the terminal should comply with the SSSG switching indication.

SSSG switching may also be implemented through an implicitly manner. For example, the network may configure a search space switch timer (searchSpaceSwitchTimer), when the network indicates that the terminal switches to SSSG index 1 or 2, the terminal starts the search space switch timer. When the timer expires, the terminal switches to SSSG index 0 to monitor the PDCCH.

### Introduction to receiver system:

By introducing a low power wake-up signal (LP-WUS), a main radio of the terminal is activated to monitor the downlink signal only after a wake-up receiver of the terminal receives an LP-WUS, thereby achieving power saving. For PDCCH monitoring, the state of the terminal in this case may be referred to as a main radio (MR) PDCCH monitoring state. Meanwhile, in some embodiments, the LP-WUS may be used not only for the RRC idle state/inactive state but also for the RRC connected state. In the embodiments of the present application, the low power wake-up signal is abbreviated as a wake-up signal.

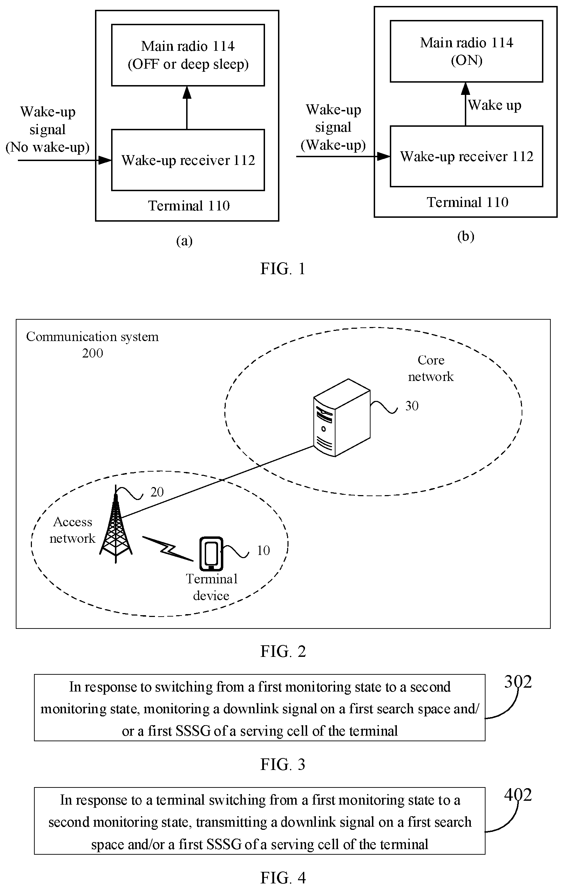

FIG. 1 illustrates a schematic diagram of a receiver system. Taking a terminal 110 as a receiver system as an example, the terminal 110 includes a wake-up receiver (WUR) 112 and a main radio 114.

In some embodiments, the wake-up receiver 112 includes at least one of: a conventional wake-up receiver or an ultra-low power wake-up receiver (LP-WUR).

In some embodiments, the main radio 114 may be equivalently understood as a main transceiver or a main radio communication unit.

To further save power, the wake-up receiver 112 is introduced for receiving the wake-up signal. Characteristics of the wake-up receiver 112 include extremely low cost, extremely low complexity, and extremely low power consumption, and the wake-up receiver 112 mainly receives the wake-up signal through envelope detection Therefore, the modulation scheme or waveform of the wake-up signal received by the wake-up receiver 112 differs from that of the signal carried by the PDCCH as defined in relevant standards. The wake-up signal is mainly an envelope signal obtained by performing amplitude-shift keying (ASK) modulation on a carrier signal. The demodulation of the envelope signal may also be achieved by a low-power circuit derived by the energy provided by the radio frequency signal, thus enabling it to be passive. The wake-up receiver 112 may also be actively powered by the terminal 110. Regardless of the power supply manner, the wake-up receiver 112 significantly reduces power consumption compared to the main radio 114. For example, the wake-up receiver 112 may achieve power consumption of less than 1 milliwatt, which is much lower than the tens to hundreds of milliwatts of the power consumption of the main radio 114. The wake-up receiver 112 may be integrated with the terminal 110 to serve as an additional module for the receiver of the terminal 110, or it may also be used alone as a wake-up function module for the terminal 110.

As illustrated in FIG. 1(a), the main radio 114 is in an OFF state or a deep sleep state. The wake-up receiver 112 receives a wake-up signal, and determines whether needs to wake up the main radio 114 based on the indication of the wake-up signal. If it is necessary to wake up the main radio 114, the network device may transmit a wake-up signal to the wake-up receiver 112 which, after receiving the wake-up signal, wakes up the main radio 114. Otherwise, the main radio 114 remains in the OFF state.

In some embodiments, a wake-up signal is transmitted to indicate wake-up; the wake-up signal is not transmitted to indicate no wake-up.

In some embodiments, when a wake-up signal carrying a wake-up indication is transmitted, it indicates wake-up. As illustrated in FIG. 1(b), the wake-up signal carries the wake-up indication. After receiving the wake-up signal, the wake-up receiver 112 wakes up the main radio 114, which then enters an ON state.

When a wake-up signal carrying a no-wake-up indication is transmitted, it indicates no wake-up. As illustrated in FIG. 1(a), the wake-up signal carries the no-wake-up indication. After receiving the wake-up signal, the wake-up receiver 112 does not wake up the main radio 114, which remains in the OFF state.

After introducing the low-power receiver state, the terminal monitors the LP-WUS in the low-power receiver state instead of using the main radio to monitor the PDCCH. If the terminal is configured with multiple SSSGs, when a terminal in an RRC connected state receives the LP-WUS and then wakes up the main radio to monitor the PDCCH, resources (search space and/or SSSG) used by the terminal to monitor the PDCCH need to be clarified.

In the method provided by the embodiments of the present application, for a terminal in an RRC connected state, in response to switching from a low-power reception state to an MR PDCCH monitoring state, the terminal may monitor a PDCCH on a first search space and/or a first SSSG of a serving cell of the terminal. The first search space and/or the first SSSG may be agreed upon by a protocol, or may be configured by a network, or may be determined by a second search space and/or a second SSSG, thereby clarifying the resources used by the terminal to monitor the PDCCH. This helps ensure that the terminal and the network device maintain a consistent understanding of the monitoring behavior for the PDCCH, to avoid the terminal from missing the PDCCH transmitted by the network device, and also avoid unnecessary resource overhead caused by the network device transmitting the PDCCH on resources not monitored by the terminal.

FIG. 2 illustrates a schematic diagram of a system architecture of a communication system 200 provided by an embodiment of the present application. The system architecture may include: a terminal 10, an access network device 20, and a core network device 30.

Terminal 10 may be referred to as a user equipment (UE), an access terminal, a user unit, a user station, a mobile site, a mobile station, a remote station, a remote terminal, a mobile device, a wireless communication device, a user agent or a user apparatus. Optionally, the terminal may also be a cellular phone, a cordless phone, a session initiation protocol (SIP) phone, a wireless local loop (WLL) station, a personal digital assistant (PDA), a handheld device with wireless communication capabilities, a computing device, other processing devices connected to a wireless modem, an in-vehicle device, a wearable device, a terminal in 5th generation system (5GS), or a terminal in a future evolved public land mobile network (PLMN), or the like, which is not limited in the embodiments of the present application. For convenience of description, the above devices are collectively referred to as a terminal.

It should be noted that, the number of terminal 10 is usually multiple, and one or more terminals 10 may be distributed within each cell managed by the access network device 20. Moreover, one or more terminals 10 may also be distributed outside the cell managed by the access network device 20. Different terminals 10 may communicate with each other based on a sidelink.

The access network device 20 is a device deployed in an access network to provide wireless communication functions for the terminal 10. The access network device 20 may include various forms of macro base stations, micro base stations, relay stations, access points, etc. In systems using different radio access technologies, the name of the device with the functions of the access network device may be various. For example, in a 5G NR system, it is referred to as gNodeB or gNB. With the evolution of communication technology, the name "access network device" may change. For convenience of description, in the embodiments of the present application, the above apparatuses providing wireless communication functions for the terminal 10 are collectively referred to as the access network device. Optionally, a communication relationship may be established between the terminal 10 and the core network device 30 via the access network device 20. For example, in a long term evolution (LTE) system, the access network device 20 may be an evolved universal terrestrial radio access network (EUTRAN) or one or more eNodeBs in the EUTRAN; in a 5G NR system, the access network device 20 may be a RAN or one or more gNBs in the RAN.

The main functions of the core network device 30 is to provide user connections, manage users, and support service bearers, serving as a bearer network that provides interfaces to external networks. For example, the core network device in a 5G NR system may include devices such as an access and mobility management function (AMF) entity, a user plane function (UPF) entity, and a session management function (SMF) entity. The access network device 20 and the core network device 30 may collectively be referred to as a network device.

In one example, the access network device 20 and the core network device 30 communicate with each other through an over-the-air technology, e.g., an NG interface in a 5G NR system. The access network device 20 and the terminal 10 communicate with each other through an over-the-air technology, e.g., a Uu interface. The terminals 10 communicate with each other through an over-the-air technology, e.g., a PC5 interface.

FIG. 3 is a flowchart of a downlink signal monitoring method provided by an exemplary embodiment of the present application. This method may be performed by a terminal and includes:
step 302: in response to switching from a first monitoring state to a second monitoring state, monitoring a downlink signal on a first search space and/or a first SSSG of a serving cell of the terminal.

The terminal is in an RRC connected state. Power consumption of the terminal during monitoring in the first monitoring state is lower than power consumption of the terminal during monitoring in the second monitoring state.

In some embodiments, a signal monitored in the first monitoring state is different from a signal monitored in the second monitoring state. For example, the first monitoring state is used to monitor a wake-up signal, while the second monitoring state is used to monitor a downlink signal.

In some embodiments, power consumption of a receiver used in the first monitoring state is lower than power consumption of a receiver used in the second monitoring state. The receiver used in the first monitoring state may be the same as or different from the receiver used in the second monitoring state. For example, a first receiver of the terminal is used in the first monitoring state, while a second receiver of the terminal is used in the second monitoring state, where the power consumption of the first receiver during monitoring is lower than the power consumption of the second receiver during monitoring. Alternatively, the same receiver of the terminal is used in the first monitoring state and the second monitoring state, and the power consumption of the receiver during monitoring in the first monitoring state is lower than that in the second monitoring state.

In some embodiments, the first monitoring state includes a low-power reception state (low-power receiver state). In some embodiments, the second monitoring state includes an MR PDCCH monitoring state. In some embodiments, the downlink signal includes a PDCCH. In some embodiments, the MR PDCCH monitoring state includes the situation where a wake-up signal is received, and then the terminal wakes up the main radio to monitor the PDCCH.

In some embodiments, in a case where the terminal is in the first monitoring state and receives a wake-up signal, the terminal switches from the first monitoring state to the second monitoring state. The wake-up signal is used to trigger the terminal to switch from the first monitoring state to the second monitoring state. Correspondingly, the terminal may further switch from the second monitoring state to the first monitoring state. In some embodiments, the wake-up signal includes at least one of an LP-WUS or an ultra-low power WUS. In the embodiments of the present application, the wake-up signal may be equivalent to/replaced by a trigger signal, a wake-up trigger signal, a sleep-exit signal, or a main radio activation signal. The specific name of the signal represented by the wake-up signal is not limited in the embodiments of the present application.

In some embodiments, the serving cell of the terminal includes at least one of a special cell (SpCell) or a secondary cell (SCell). In some embodiments, for a terminal with dual connectivity, two cell groups in the dual connectivity are a master cell group (MCG) and a secondary cell group (SCG). In the MCG, there may be a plurality of cells, one of which is used for the terminal to initiate initial access and is referred to as a primary cell (PCell). The PCell in the MCG and a secondary cell (SCell) in the MCG are associated with each other through carrier aggregation (CA). That is, the MCG includes the primary cell (PCell) and the secondary cell (SCell). The SCG includes a primary secondary cell (PSCell) and the secondary cell (SCell). Since much of signaling are typically transmitted only on the PCell and PSCell, for convenience of description, a concept of a special cell (SpCell) is defined in relevant communication protocols, where the PCell and PSCell may collectively be referred to as SpCell.

In some embodiments, the terminal is configured with multiple search spaces and/or SSSGs. The first search space and the first SSSG are used to indicate resources used by the terminal to monitor the downlink signal. In some embodiments, the first search space is used to indicate a search space for the terminal to monitor PDCCH in response to switching from a low-power reception state to an MR PDCCH monitoring state. The first SSSG is used to indicate an SSSG for the terminal to monitor PDCCH in response to switching from the low-power reception state to the MR PDCCH monitoring state.

In some embodiments, the first search space and/or the first SSSG are configured by a network device. In some embodiments, the first search space and/or the first SSSG are agreed upon by a protocol. In some embodiments, the first search space is determined based on a second search space, and/or the first SSSG is determined based on a second SSSG. In some embodiments, the configuration methods for the first search space and the first SSSG are the same or different.

### Regarding a case of configured by a network device:

In some embodiments, the first search space and/or the first SSSG are configured on one or more bandwidth parts (BWPs) of each serving cell of the terminal. That is, for one or more BWPs corresponding to each serving cell of the terminal, the first search space and/or the first SSSG may be configured.

In some embodiments, the first search space and/or the first SSSG are configured on one or more BWPs of one or more serving cells of the terminal. The one or more serving cells are all serving cells of the terminal or a part of serving cells of the terminal. That is, for all or part of the serving cells of the terminal, the first search space and/or the first SSSG may be configured on one or more BWPs corresponding to each serving cell.

In some embodiments, the first search space includes one or more search spaces. For example, the first search space includes search space identifier (ID) 1, or the first search space includes search space ID 1 and search space ID 2. In some embodiments, the first SSSG includes one or more SSSGs. For example, the first SSSG includes SSSG index 1, or the first SSSG includes SSSG index 1 and SSSG index 2.

In some embodiments, the terminal receives configuration information transmitted by the network device, where the configuration information is used to configure the first search space and/or the first SSSG. In some embodiments, the configuration information includes at least one of dedicated signaling for the terminal or a system message.

In some embodiments, the dedicated signaling includes at least one of RRC signaling, a medium access control control element (MAC CE), or a PDCCH. In some embodiments, the RRC signaling includes at least one of an RRC reconfiguration message, an RRC resume message, or an RRC setup message.

In some embodiments, on one BWP of each serving cell of the terminal, the terminal monitors the downlink signal according to the first search space and/or the first SSSG. For example, when a terminal in an RRC connected state switches from a low-power reception state to an MR PDCCH monitoring state, for each serving cell, the terminal monitors the PDCCH on one BWP according to the first search space and/or the first SSSG.

### Regarding a case of agreed upon by a protocol:

In some embodiments, on one BWP of each serving cell of the terminal, the terminal monitors the downlink signal according to the first search space and/or the first SSSG. For example, when a terminal in an RRC connected state switches from a low-power reception state to an MR PDCCH monitoring state, for each serving cell, the terminal monitors the PDCCH on one BWP according to the first search space and/or the first SSSG. The first search space and/or the first SSSG used by the terminal to monitor the downlink signal are agreed upon by a protocol.

In some embodiments, the BWP includes at least one of an active BWP, an initial BWP, or a default BWP.

In some embodiments, the first search space used by the terminal to monitor the downlink signal includes at least one of all search spaces configured for the terminal or a part of search spaces configured for the terminal. The part of search spaces includes one or more search spaces. For example, the first search space includes search space ID 1 among all search spaces configured for the terminal. Alternatively, the first search space includes search space ID 1 and search space ID 2 among all search spaces configured for the terminal.

In some embodiments, the first SSSG used by the terminal to monitor the downlink signal includes at least one of all SSSGs configured for the terminal or a part of SSSGs configured for the terminal. The part of SSSGs includes one or more SSSGs. For example, the first SSSG includes SSSG index 0 among all SSSGs configured for the terminal. Alternatively, the first SSSG includes SSSG index 0 and SSSG index 1 among all SSSGs configured for the terminal.

### Regarding a case of determined based on the second search space and/or the second SSSG:

In some embodiments, on one BWP of each serving cell of the terminal, the terminal monitors the downlink signal according to the first search space and/or the first SSSG. For example, when a terminal in an RRC connected state switches from a low-power reception state to an MR PDCCH monitoring state, for each serving cell, the terminal monitors the PDCCH on one BWP according to the first search space and/or the first SSSG. The first search space and/or the first SSSG used by the terminal to monitor the downlink signal are determined based on the second search space and/or the second SSSG.

In some embodiments, the first search space is the same as the second search space. In some embodiments, the first SSSG is the same as the second SSSG.

In some embodiments, the second search space includes a search space on which the terminal monitors a downlink signal before switching to the second monitoring state. In some embodiments, the second search space includes a search space on which the terminal most recently or last monitored a downlink signal before switching to the second monitoring state. In some embodiments, the second SSSG includes an SSSG on which the terminal monitors a downlink signal before switching to the second monitoring state. In some embodiments, the second SSSG includes an SSSG on which the terminal most recently or last monitored a downlink signal before switching to the second monitoring state.

In some embodiments, the second search space includes a search space on which the terminal monitors a downlink signal before receiving the wake-up signal. In some embodiments, the second search space includes a search space on which the terminal most recently or last monitored a downlink signal before receiving the wake-up signal. In some embodiments, the second SSSG includes an SSSG on which the terminal monitors a downlink signal before receiving the wake-up signal. In some embodiments, the second SSSG includes an SSSG on which the terminal most recently or last monitored a downlink signal before receiving the wake-up signal.

In some embodiments, the second search space includes a search space on which the terminal monitors a downlink signal before entering the first monitoring state. In some embodiments, the second search space includes a search space on which the terminal most recently or last monitored a downlink signal before entering the first monitoring state. In some embodiments, the second SSSG includes an SSSG on which the terminal monitors a downlink signal before entering the first monitoring state. In some embodiments, the second SSSG includes an SSSG on which the terminal most recently or last monitored a downlink signal before entering the first monitoring state. In some embodiments, the first monitoring state may be referred to as/equivalent to/replaced by an LP-WUS monitoring state.

In summary, in the method provided by the embodiments, for the terminal in the RRC connected state, in response to switching from the first monitoring state to the second monitoring state with higher power consumption, the terminal may monitor the downlink signal on the first search space and/or the first SSSG of a serving cell, thereby clarifying the resources used by the terminal to monitor the downlink signal (e.g., PDCCH). This helps ensure that the terminal and the network device maintain a consistent understanding of the monitoring behavior for the downlink signal, to avoid the terminal from missing the downlink signal transmitted by the network device, and also avoid unnecessary resource overhead caused by the network device transmitting the downlink signal on resources not monitored by the terminal.

FIG. 4 is a flowchart of a downlink signal transmitting method provided by an exemplary embodiment of the present application. This method may be performed by a network device and includes:
step 402: in response to a terminal switching from a first monitoring state to a second monitoring state, transmitting a downlink signal on a first search space and/or a first SSSG of a serving cell of the terminal.

The terminal is in an RRC connected state. The first search space and/or the first SSSG are used by the terminal to monitor the downlink signal. Power consumption of the terminal during monitoring in the first monitoring state is lower than power consumption of the terminal during monitoring in the second monitoring state.

In some embodiments, a signal monitored in the first monitoring state is different from a signal monitored in the second monitoring state. For example, the first monitoring state is used to monitor a wake-up signal, while the second monitoring state is used to monitor a downlink signal.

In some embodiments, power consumption of a receiver used in the first monitoring state is lower than power consumption of a receiver used in the second monitoring state. The receiver used in the first monitoring state may be the same as or different from the receiver used in the second monitoring state.

In some embodiments, the first monitoring state includes a low-power reception state (low-power receiver state). In some embodiments, the second monitoring state includes an MR PDCCH monitoring state. In some embodiments, the downlink signal includes a PDCCH. In some embodiments, the MR PDCCH monitoring state includes the situation where a wake-up signal is received, and then the terminal wakes up the main radio to monitor the PDCCH.

In some embodiments, the network device transmits a wake-up signal to a terminal which is in the first monitoring state. In a case where the terminal is in the first monitoring state and receives the wake-up signal, the terminal switches from the first monitoring state to the second monitoring state. The wake-up signal is used to trigger the terminal to switch from the first monitoring state to the second monitoring state. Correspondingly, the terminal may further switch from the second monitoring state to the first monitoring state. In some embodiments, the wake-up signal includes at least one of an LP-WUS or an ultra-low power WUS. In the embodiments of the present application, the wake-up signal may be equivalent to/replaced by a trigger signal, a wake-up trigger signal, a sleep-exit signal, or a main radio activation signal. The specific name of the signal represented by the wake-up signal is not limited in the embodiments of the present application.

In some embodiments, the serving cell of the terminal includes at least one of an SpCell or an SCell.

In some embodiments, the terminal is configured with multiple search spaces and/or SSSGs. The first search space and the first SSSG are used to indicate resources used by the terminal to monitor the downlink signal. In some embodiments, the first search space is used to indicate a search space for the terminal to monitor PDCCH in response to switching from a low-power reception state to an MR PDCCH monitoring state. The first SSSG is used to indicate an SSSG for the terminal to monitor PDCCH in response to switching from the low-power reception state to the MR PDCCH monitoring state.

In some embodiments, the first search space and/or the first SSSG are configured by a network device. In some embodiments, the first search space and/or the first SSSG are agreed upon by a protocol. In some embodiments, the first search space is determined based on a second search space, and/or the first SSSG is determined based on a second SSSG. In some embodiments, the configuration methods for the first search space and the first SSSG are the same or different.

### Regarding a case of configured by a network device:

In some embodiments, the first search space and/or the first SSSG are configured on one or more BWPs of each serving cell of the terminal. That is, for one or more BWPs corresponding to each serving cell of the terminal, the first search space and/or the first SSSG may be configured.

In some embodiments, the first search space and/or the first SSSG are configured on one or more BWPs of one or more serving cells of the terminal. The one or more serving cells are all serving cells of the terminal or a part of serving cells of the terminal. That is, for all or part of the serving cells of the terminal, the first search space and/or the first SSSG may be configured on one or more BWPs corresponding to each serving cell.

In some embodiments, the first search space includes one or more search spaces. In some embodiments, the first SSSG includes one or more SSSGs.

In some embodiments, the network device transmits configuration information to the terminal, where the configuration information is used to configure the first search space and/or the first SSSG. In some embodiments, the configuration information includes at least one of dedicated signaling for the terminal or a system message.

In some embodiments, the dedicated signaling includes at least one of RRC signaling, a MAC CE, or a PDCCH. In some embodiments, the RRC signaling includes at least one of an RRC reconfiguration message, an RRC resume message, or an RRC setup message.

In some embodiments, the network device transmits, according to the first search space and/or the first SSSG, the downlink signal on one BWP of each serving cell of the terminal. On one BWP of each serving cell of the terminal, the terminal monitors the downlink signal according to the first search space and/or the first SSSG. For example, when a terminal in an RRC connected state switches from a low-power reception state to an MR PDCCH monitoring state, for each serving cell, the terminal monitors the PDCCH on one BWP according to the first search space and/or the first SSSG.

### Regarding a case of agreed upon by a protocol:

In some embodiments, the network device transmits, according to the first search space and/or the first SSSG, the downlink signal on one BWP of each serving cell of the terminal. On one BWP of each serving cell of the terminal, the terminal monitors the downlink signal according to the first search space and/or the first SSSG. For example, when a terminal in an RRC connected state switches from a low-power reception state to an MR PDCCH monitoring state, for each serving cell, the terminal monitors the PDCCH on one BWP according to the first search space and/or the first SSSG. The first search space and/or the first SSSG used by the terminal to monitor the downlink signal are agreed upon by a protocol.

In some embodiments, the BWP includes at least one of an active BWP, an initial BWP, or a default BWP.

In some embodiments, the first search space used by the terminal to monitor the downlink signal includes at least one of all search spaces configured for the terminal or a part of search spaces configured for the terminal. The part of search spaces includes one or more search spaces.

In some embodiments, the first SSSG used by the terminal to monitor the downlink signal includes at least one of all SSSGs configured for the terminal or a part of SSSGs configured for the terminal. The part of SSSGs includes one or more SSSGs

### Regarding a case of determined based on the second search space and/or the second SSSG:

In some embodiments, the network device transmits, according to the first search space and/or the first SSSG, the downlink signal on one BWP of each serving cell of the terminal. On one BWP of each serving cell of the terminal, the terminal monitors the downlink signal according to the first search space and/or the first SSSG. For example, when a terminal in an RRC connected state switches from a low-power reception state to an MR PDCCH monitoring state, for each serving cell, the terminal monitors the PDCCH on one BWP according to the first search space and/or the first SSSG. The first search space and/or the first SSSG used by the terminal to monitor the downlink signal are determined based on the second search space and/or second SSSG.

In some embodiments, the first search space is the same as the second search space. In some embodiments, the first SSSG is the same as the second SSSG.

In some embodiments, the second search space includes a search space on which the terminal monitors a downlink signal before switching to the second monitoring state. In some embodiments, the second search space includes a search space on which the terminal most recently or last monitored a downlink signal before switching to the second monitoring state. In some embodiments, the second SSSG includes an SSSG on which the terminal monitors a downlink signal before switching to the second monitoring state. In some embodiments, the second SSSG includes an SSSG on which the terminal most recently or last monitored a downlink signal before switching to the second monitoring state.

In some embodiments, the second search space includes a search space on which the terminal monitors a downlink signal before receiving the wake-up signal. In some embodiments, the second search space includes a search space on which the terminal most recently or last monitored a downlink signal before receiving the wake-up signal. In some embodiments, the second SSSG includes an SSSG on which the terminal monitors the downlink signal before receiving the wake-up signal. In some embodiments, the second SSSG includes an SSSG on which the terminal most recently or last monitored a downlink signal before receiving the wake-up signal.

In some embodiments, the second search space includes a search space on which the terminal monitors a downlink signal before entering the first monitoring state. In some embodiments, the second search space includes a search space on which the terminal most recently or last monitored a downlink signal before entering the first monitoring state. In some embodiments, the second SSSG includes an SSSG on which the terminal monitors a downlink signal before entering the first monitoring state. In some embodiments, the second SSSG includes an SSSG on which the terminal most recently or last monitored a downlink signal before entering the first monitoring state. In some embodiments, the first monitoring state may be referred to as/equivalent to/replaced by an LP-WUS monitoring state.

In summary, in the method provided by the embodiments, for the terminal in the RRC connected state, in response to the terminal switching from the first monitoring state to the second monitoring state with higher power consumption, the network transmits the downlink signal on the first search space and/or the first SSSG of the serving cell of the terminal, and the terminal may monitor the downlink signal on the first search space and/or the first SSSG of the serving cell, thereby clarifying the resources used by the terminal to monitor the downlink signal (e.g., PDCCH). This helps ensure that the terminal and the network device maintain a consistent understanding of the monitoring behavior for the downlink signal, to avoid the terminal from missing the downlink signal transmitted by the network device, and also avoid unnecessary resource overhead caused by the network device transmitting the downlink signal on resources not monitored by the terminal.

In the method provided by the present application, for a terminal in an RRC connected state, in response to switching from a first monitoring state to a second monitoring state, the terminal may monitor a downlink signal on a first search space and/or a first SSSG of its serving cell, thereby clarifying the resources used by the terminal to monitor the downlink signal (e.g., PDCCH). The determining method of the first search space and/or the first SSSG includes the following three methods:
(1) configured by a network device;
(2) agreed upon by a protocol;
(3) determined based on a second search space and/or a second SSSG.

### For the first determining method:

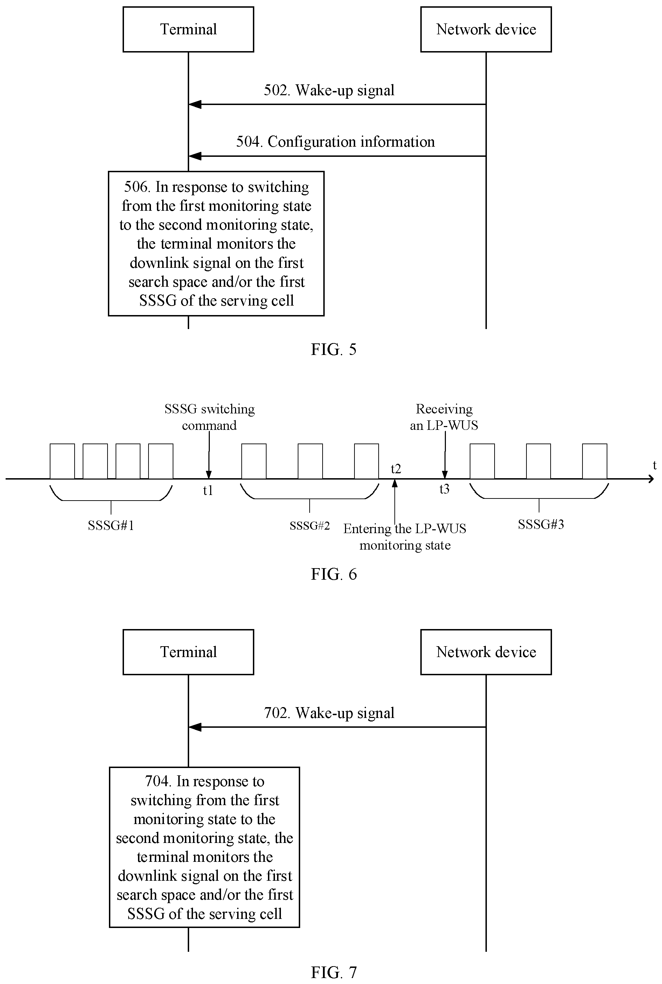

FIG. 5 is a flowchart of a downlink signal monitoring method provided by an exemplary embodiment of the present application. The method includes the following steps.

In step 502, the network device transmits a wake-up signal to the terminal.

The terminal is in an RRC connected state. The network device transmits the wake-up signal to the terminal which is in the first monitoring state, where the wake-up signal is used to indicate that the terminal switches from the first monitoring state to the second monitoring state. Correspondingly, the terminal may further switch from the second monitoring state to the first monitoring state. In some embodiments, the wake-up signal includes at least one of an LP-WUS or an ultra-low power WUS. In the embodiments of the present application, the wake-up signal may be equivalent to/replaced by a trigger signal, a wake-up trigger signal, a sleep-exit signal, or a main radio activation signal. The specific name of the signal represented by the wake-up signal is not limited in the embodiments of the present application.

Power consumption of the terminal during monitoring in the first monitoring state is lower than power consumption of the terminal during monitoring in the second monitoring state.

In some embodiments, a signal monitored in the first monitoring state is different from a signal monitored in the second monitoring state. For example, the first monitoring state is used to monitor a wake-up signal, while the second monitoring state is used to monitor a downlink signal.

In some embodiments, power consumption of a receiver used in the first monitoring state is lower than power consumption of a receiver used in the second monitoring state. The receiver used in the first monitoring state may be the same as or different from the receiver used in the second monitoring state. For example, a first receiver of the terminal is used in the first monitoring state, while a second receiver of the terminal is used in the second monitoring state, where the power consumption of the first receiver during monitoring is lower than the power consumption of the second receiver during monitoring. Alternatively, the same receiver of the terminal is used in the first monitoring state and the second monitoring state, and the power consumption of the receiver during monitoring in the first monitoring state is lower than that in the second monitoring state.

In some embodiments, the first monitoring state includes a low-power reception state (low-power receiver state). In some embodiments, the second monitoring state includes an MR PDCCH monitoring state. In some embodiments, the downlink signal includes a PDCCH. In some embodiments, the MR PDCCH monitoring state includes the situation where a wake-up signal is received, and then the terminal wakes up the main radio to monitor the PDCCH.

In step 504, the network device transmits configuration information to the terminal.

The configuration information is used to configure the first search space and/or the first SSSG. In some embodiments, the terminal is configured with multiple search spaces and/or SSSGs. The first search space and the first SSSG are used to indicate resources used by the terminal to monitor the downlink signal. In some embodiments, the first search space is used to indicate a search space for the terminal to monitor PDCCH in response to switching from a low-power reception state to an MR PDCCH monitoring state. The first SSSG is used to indicate an SSSG for the terminal to monitor PDCCH in response to switching from the low-power reception state to the MR PDCCH monitoring state.

In some embodiments, the configuration information includes at least one of dedicated signaling for the terminal or a system message. In some embodiments, the dedicated signaling includes at least one of RRC signaling, a MAC CE, or a PDCCH. In some embodiments, the RRC signaling includes at least one of an RRC reconfiguration message, an RRC resume message, or an RRC setup message.

In some embodiments, the first search space and/or the first SSSG are configured on one or more BWPs of each serving cell of the terminal. That is, for one or more BWPs corresponding to each serving cell of the terminal, the first search space and/or the first SSSG may be configured.

In some embodiments, the first search space and/or the first SSSG are configured on one or more BWPs of one or more serving cells of the terminal. The one or more serving cells are all serving cells of the terminal or a part of serving cells of the terminal. That is, for all or part of the serving cells of the terminal, the first search space and/or the first SSSG may be configured on one or more BWPs corresponding to each serving cell.

In some embodiments, the first search space includes one or more search spaces. For example, the first search space includes search space ID 1, or the first search space includes search space ID 1 and search space ID 2. In some embodiments, the first SSSG includes one or more SSSGs. For example, the first SSSG includes SSSG index 1, or the first SSSG includes SSSG index 1 and SSSG index 2.

In step 506, in response to switching from the first monitoring state to the second monitoring state, the terminal monitors the downlink signal on the first search space and/or the first SSSG of the serving cell.

In some embodiments, the serving cell of the terminal includes at least one of an SpCell or an SCell.

In some embodiments, on one BWP of each serving cell of the terminal, the terminal monitors the downlink signal according to the first search space and/or the first SSSG. For example, in a case where a terminal in an RRC connected state switches from a low-power reception state to an MR PDCCH monitoring state, for each serving cell, the terminal monitors a PDCCH on one BWP according to the first search space and/or the first SSSG.

Exemplarily, FIG. 6 is a schematic diagram of a PDCCH monitoring procedure provided by an exemplary embodiment of the present application. As illustrated in FIG. 6, before t1, the terminal is in the MR PDCCH monitoring state and monitors the PDCCH on SSSG#1. At t1, the terminal receives an SSSG switching command. During t1-t2, the terminal is in the MR PDCCH monitoring state and monitors the PDCCH on the switched SSSG#2. At t2, the terminal enters the LP-WUS monitoring state. At t3, the terminal receives an LP-WUS and re-enters the MR PDCCH monitoring state. After t3, the terminal monitors the PDCCH on SSSG#3. SSSG#3 is configured by the network device, and SSSG#3 may be the same as or different from SSSG#1 and SSSG#2.

It should be noted that, step 502 may be performed before step 504, or step 502 may be performed after step 504, or step 502 and step 504 may be performed simultaneously, which is not limited in the embodiments of the present application.

In this embodiment, step 502, step 504, and step 506 are optional. In different embodiments, one or more of these steps may be omitted or replaced.

Step 502 may be implemented as an independent embodiment, such as being independently implemented as a wake-up signal receiving method on a terminal side or a wake-up signal transmitting method on a network device side. Step 504 may be implemented as an independent embodiment, such as being independently implemented as a configuration method on the terminal side or the network device side. Step 506 may be implemented as an independent embodiment, such as being independently implemented as a downlink signal monitoring method on the terminal side.

In summary, in the method provided by the embodiments, for the terminal in the RRC connected state, in response to switching from the first monitoring state to the second monitoring state with higher power consumption, the terminal may monitor the downlink signal (e.g., PDCCH) on the first search space and/or the first SSSG of the serving cell according to network configuration, thereby clarifying the resources used by the terminal to monitor the downlink signal by providing a method for determining the first search space and/or the first SSSG according to network configuration. This helps ensure that the terminal and the network device maintain a consistent understanding of the monitoring behavior of the downlink signal, to avoid the terminal from missing the downlink signal transmitted by the network device, and also avoid unnecessary resource overhead caused by the network device transmitting the downlink signal on resources not monitored by the terminal.

The method provided by the embodiments further provides a reasonable manner to configure resources of the first search space and/or the first SSSG, by configuring the first search space and/or the first SSSG on the BWP of the serving cell of the terminal. Additionally, the first search space may include one or more search spaces, and the first SSSG may include one or more SSSGs, thereby achieving flexible configuration for the first search space and/or the first SSSG. The method provided by the embodiments further specifies the signaling used to configure the first search space and/or the first SSSG. Additionally, by monitoring a downlink signal on one BWP of the serving cell according to network configuration, a method for reasonably utilizing resources for monitoring the downlink signal is provided.

### For the second determining method:

FIG. 7 is a flowchart of a downlink signal monitoring method provided by an exemplary embodiment of the present application. The method includes the following steps.

In step 702, the network device transmits a wake-up signal to the terminal.

The terminal is in an RRC connected state. The network device transmits the wake-up signal to the terminal which is in the first monitoring state, where the wake-up signal is used to indicate that the terminal switches from the first monitoring state to the second monitoring state. Correspondingly, the terminal may further switch from the second monitoring state to the first monitoring state. In some embodiments, the wake-up signal includes at least one of an LP-WUS or an ultra-low power WUS. In the embodiments of the present application, the wake-up signal may be equivalent to/replaced by a trigger signal, a wake-up trigger signal, a sleep-exit signal, or a main radio activation signal. The specific name of the signal represented by the wake-up signal is not limited in the embodiments of the present application.

Power consumption of the terminal during monitoring in the first monitoring state is lower than power consumption of the terminal during monitoring in the second monitoring state.

In some embodiments, a signal monitored in the first monitoring state is different from a signal monitored in the second monitoring state. For example, the first monitoring state is used to monitor a wake-up signal, while the second monitoring state is used to monitor a downlink signal.

In some embodiments, power consumption of a receiver used in the first monitoring state is lower than power consumption of a receiver used in the second monitoring state. The receiver used in the first monitoring state may be the same as or different from the receiver used in the second monitoring state. For example, a first receiver of the terminal is used in the first monitoring state, while a second receiver of the terminal is used in the second monitoring state, where the power consumption of the first receiver during monitoring is lower than the power consumption of the second receiver during monitoring. Alternatively, the same receiver of the terminal is used in the first monitoring state and the second monitoring state, and the power consumption of the receiver during monitoring in the first monitoring state is lower than that in the second monitoring state.

In some embodiments, the first monitoring state includes a low-power reception state (low-power receiver state). In some embodiments, the second monitoring state includes an MR PDCCH monitoring state. In some embodiments, the downlink signal includes a PDCCH. In some embodiments, the MR PDCCH monitoring state includes the situation where a wake-up signal is received, and then the terminal wakes up the main radio to monitor the PDCCH.

In step 704, in response to switching from the first monitoring state to the second monitoring state, the terminal monitors the downlink signal on the first search space and/or the first SSSG of the serving cell.

In some embodiments, on one BWP of each serving cell of the terminal, the terminal monitors the downlink signal according to the first search space and/or the first SSSG. For example, in a case where a terminal in an RRC connected state switches from a low-power reception state to an MR PDCCH monitoring state, for each serving cell, the terminal monitors a PDCCH on one BWP according to the first search space and/or the first SSSG. The first search space and/or the first SSSG used by the terminal to monitor the downlink signal are agreed upon by a protocol.

In some embodiments, the BWP includes at least one of an active BWP, an initial BWP, or a default BWP.

In some embodiments, the first search space used by the terminal to monitor the downlink signal includes at least one of all search spaces configured for the terminal or a part of search spaces configured for the terminal. The part of search spaces includes one or more search spaces. For example, the first search space includes search space ID 1 among all search spaces configured for the terminal. Alternatively, the first search space includes search space ID 1 and search space ID 2 among all search spaces configured for the terminal.

In some embodiments, the first SSSG used by the terminal to monitor the downlink signal includes at least one of all SSSGs configured for the terminal or a part of SSSGs configured for the terminal. The part of SSSGs includes one or more SSSGs. For example, the first SSSG includes SSSG index 0 among all SSSGs configured for the terminal. Alternatively, the first SSSG includes SSSG index 0 and SSSG index 1 among all SSSGs configured for the terminal.

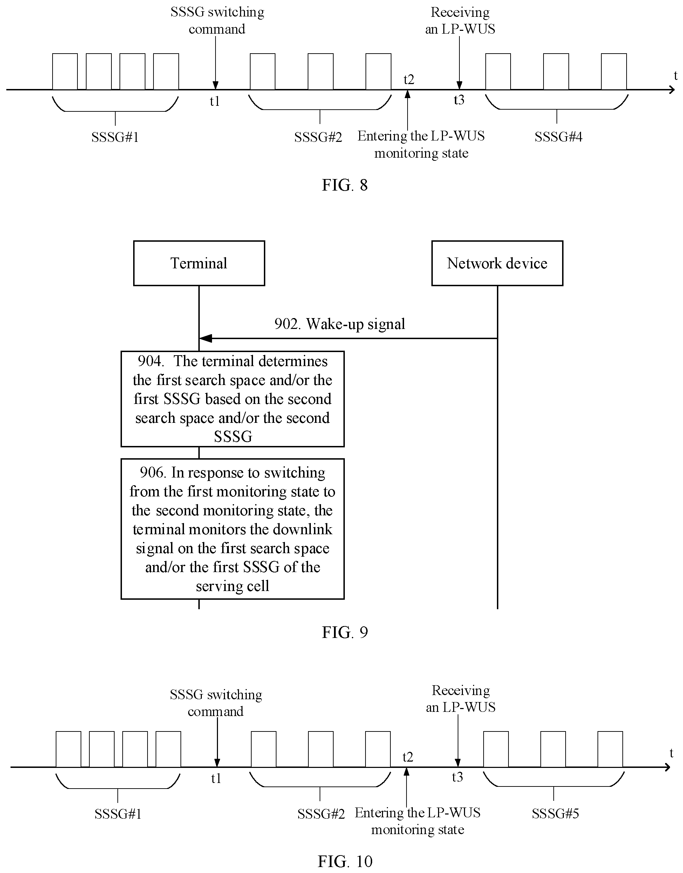

Exemplarily, FIG. 8 is a schematic diagram of a PDCCH monitoring procedure provided by an exemplary embodiment of the present application. As illustrated in FIG. 8, before t1, the terminal is in the MR PDCCH monitoring state and monitors the PDCCH on SSSG#1. At t1, the terminal receives an SSSG switching command. During t1-t2, the terminal is in the MR PDCCH monitoring state and monitors the PDCCH on the switched SSSG#2. At t2, the terminal enters the LP-WUS monitoring state. At t3, the terminal receives an LP-WUS and re-enters the MR PDCCH monitoring state. After t3, the terminal monitors the PDCCH on SSSG#4. SSSG#4 is agreed upon by a protocol, for example, SSSG#4 includes at least one of SSSG#1 or SSSG#2.

In this embodiment, step 702 and step 704 are optional. In different embodiments, one or more of these steps may be omitted or replaced.

Step 702 may be implemented as an independent embodiment, such as being independently implemented as a wake-up signal receiving method on a terminal side or a wake-up signal transmitting method on a network device side. Step 704 may be implemented as an independent embodiment, such as being independently implemented as a downlink signal monitoring method on the terminal side.

In summary, in the method provided by the embodiments, for the terminal in the RRC connected state, in response to switching from the first monitoring state to the second monitoring state with higher power consumption, the terminal may monitor the downlink signal on the first search space and/or the first SSSG of the serving cell according to the protocol, thereby clarifying the resources used by the terminal to monitor the downlink signal (e.g., PDCCH) by providing a method for determining the first search space and/or the first SSSG according to the protocol. This helps ensure that the terminal and the network device maintain a consistent understanding of the monitoring behavior of the downlink signal, to avoid the terminal from missing the downlink signal transmitted by the network device, and also avoid unnecessary resource overhead caused by the network device transmitting the downlink signal on resources not monitored by the terminal.

The method provided by the embodiment further specifies that the first search space and/or the first SSSG is determined by the protocol according to the search space and/or SSSG configured for the terminal, avoiding using additional resources as the first search space and/or the first SSSG, which may reduce resource overhead and has lower implementation costs. Additionally, by monitoring the downlink signal on one BWP of the serving cell according to network configuration, a method for reasonably utilizing resources for monitoring the downlink signal is provided.

### For the third determining method:

FIG. 9 is a flowchart of a downlink signal monitoring method provided by an exemplary embodiment of the present application. The method includes the following steps.

In step 902, the network device transmits a wake-up signal to the terminal.

The terminal is in an RRC connected state. The network device transmits the wake-up signal to the terminal which is in the first monitoring state, where the wake-up signal is used to indicate that the terminal switches from the first monitoring state to the second monitoring state. Correspondingly, the terminal may further switch from the second monitoring state to the first monitoring state. In some embodiments, the wake-up signal includes at least one of an LP-WUS or an ultra-low power WUS. In the embodiments of the present application, the wake-up signal may be equivalent to/replaced by a trigger signal, a wake-up trigger signal, a sleep-exit signal, or a main radio activation signal. The specific name of the signal represented by the wake-up signal is not limited in the embodiments of the present application.

Power consumption of the terminal during monitoring in the first monitoring state is lower than power consumption of the terminal during monitoring in the second monitoring state.

In some embodiments, a signal monitored in the first monitoring state is different from a signal monitored in the second monitoring state. For example, the first monitoring state is used to monitor a wake-up signal, while the second monitoring state is used to monitor a downlink signal.

In some embodiments, power consumption of a receiver used in the first monitoring state is lower than power consumption of a receiver used in the second monitoring state. The receiver used in the first monitoring state may be the same as or different from the receiver used in the second monitoring state. For example, a first receiver of the terminal is used in the first monitoring state, while a second receiver of the terminal is used in the second monitoring state, where the power consumption of the first receiver during monitoring is lower than the power consumption of the second receiver during monitoring during monitoring. Alternatively, the same receiver of the terminal is used in the first monitoring state and the second monitoring state, and the power consumption of the receiver during monitoring in the first monitoring state is lower than that in the second monitoring state.

In some embodiments, the first monitoring state includes a low-power reception state (low-power receiver state). In some embodiments, the second monitoring state includes an MR PDCCH monitoring state. In some embodiments, the downlink signal includes a PDCCH. In some embodiments, the MR PDCCH monitoring state includes the situation where a wake-up signal is received, and then the terminal wakes up the main radio to monitor the PDCCH.

In step 904, the terminal determines the first search space and/or the first SSSG based on the second search space and/or the second SSSG.

In some embodiments, the first search space is the same as the second search space. In some embodiments, the first SSSG is the same as the second SSSG.

In some embodiments, the second search space includes a search space on which the terminal monitors a downlink signal before switching to the second monitoring state. In some embodiments, the second search space includes a search space on which the terminal most recently or last monitored a downlink signal before switching to the second monitoring state. In some embodiments, the second SSSG includes an SSSG on which the terminal monitors a downlink signal before switching to the second monitoring state. In some embodiments, the second SSSG includes an SSSG on which the terminal most recently or last monitored a downlink signal before switching to the second monitoring state.

In some embodiments, the second search space includes a search space on which the terminal monitors a downlink signal before receiving the wake-up signal. In some embodiments, the second search space includes a search space on which the terminal most recently or last monitored a downlink signal before receiving the wake-up signal. In some embodiments, the second SSSG includes an SSSG on which the terminal monitors a downlink signal before receiving the wake-up signal. In some embodiments, the second SSSG includes an SSSG on which the terminal most recently or last monitored a downlink signal before receiving the wake-up signal.

In some embodiments, the second search space includes a search space on which the terminal monitors a downlink signal before entering the first monitoring state. In some embodiments, the second search space includes a search space on which the terminal most recently or last monitored a downlink signal before entering the first monitoring state. In some embodiments, the second SSSG includes an SSSG on which the terminal monitors a downlink signal before entering the first monitoring state. In some embodiments, the second SSSG includes an SSSG on which the terminal most recently or last monitored a downlink signal before entering the first monitoring state. In some embodiments, the first monitoring state may be referred to as/equivalent to/replaced by an LP-WUS monitoring state.

In step 906, in response to switching from the first monitoring state to the second monitoring state, the terminal monitors the downlink signal on the first search space and/or the first SSSG of the serving cell.

In some embodiments, on one BWP of each serving cell of the terminal, the terminal monitors the downlink signal according to the first search space and/or the first SSSG. For example, in a case where a terminal in an RRC connected state switches from a low-power reception state to an MR PDCCH monitoring state, for each serving cell, the terminal monitors a PDCCH on one BWP according to the first search space and/or the first SSSG. The first search space and/or the first SSSG used by the terminal to monitor the downlink signal are determined based on the second search space and/or the second SSSG.

Exemplarily, FIG. 10 is a schematic diagram of a PDCCH monitoring procedure provided by an exemplary embodiment of the present application. As illustrated in FIG. 10, before t1, the terminal is in the MR PDCCH monitoring state and monitors the PDCCH on SSSG#1. At t1, the terminal receives an SSSG switching command. During t1-t2, the terminal is in the MR PDCCH monitoring state and monitors the PDCCH on the switched SSSG#2. At t2, the terminal enters the LP-WUS monitoring state. At t3, the terminal receives an LP-WUS and re-enters the MR PDCCH monitoring state. After t3, the terminal monitors the PDCCH on SSSG#5. SSSG#5 is the same as the SSSG (SSSG#2) on which the terminal last monitored the PDCCH before switching to the MR PDCCH monitoring state, or SSSG#5 is the same as the SSSG (SSSG#2) on which the terminal last monitored the PDCCH before receiving the LP-WUS, or SSSG#5 is the same as the SSSG (SSSG#2) on which the terminal last monitored the PDCCH before entering the LP-WUS monitoring state.

In this embodiment, step 902, step 904, and step 906 are optional. In different embodiments, one or more of these steps may be omitted or replaced.

Step 902 may be implemented as an independent embodiment, such as being independently implemented as a wake-up signal receiving method on a terminal side or a wake-up signal transmitting method on a network device side. Step 904 may be implemented as an independent embodiment, such as being independently implemented as a resource determining method on the terminal side. Step 906 may be implemented as an independent embodiment, such as being independently implemented as a downlink signal monitoring method on the terminal side.

In summary, in the method provided by the embodiments, for the terminal in the RRC connected state, in response to switching from the first monitoring state to the second monitoring state with higher power consumption, the terminal may monitor the downlink signal on the first search space and/or the first SSSG of the serving cell according to the second search space and/or second SSSG, thereby clarifying the resources used by the terminal to monitor the downlink signal (e.g., PDCCH) by providing a method for determining the first search space and/or the first SSSG according to the second search space and/or second SSSG. This helps ensure that the terminal and the network device maintain a consistent understanding of the monitoring behavior of the downlink signal, to avoid the terminal from missing the downlink signal transmitted by the network device, and also avoid unnecessary resource overhead caused by the network device transmitting the downlink signal on resources not monitored by the terminal.

In the method provided by the embodiments, the first search space and/or the first SSSG is determined according to the resources used by the terminal to monitor the downlink signal before switching to the second monitoring state, or the resources used to monitor the downlink signal before receiving the wake-up signal, or the resources used to monitor the downlink signal before entering the first monitoring state. This may implement that the first search space and/or the first SSSG is determined based on the terminal existing configuration, avoiding using additional resources as the first search space and/or the first SSSG, thereby reducing resource overhead and having lower implementation costs. Additionally, by monitoring the downlink signal on one BWP of the serving cell according to network configuration, a method for reasonably utilizing resources for monitoring the downlink signal is provided.

It should be noted that, the order of the method steps provided by the embodiments of the present application may be appropriately adjusted, steps may also be added or removed as needed, and different steps maybe freely combined to form new embodiments. Any variations of the method that can be easily conceived by those skilled in the art within the technical scope disclosed in the present application shall fall within the protection scope of the present application, which will not be repeated here. Additionally, the sequential order of the aforementioned different scenarios does not imply any preference, it is merely for the convenience of description.

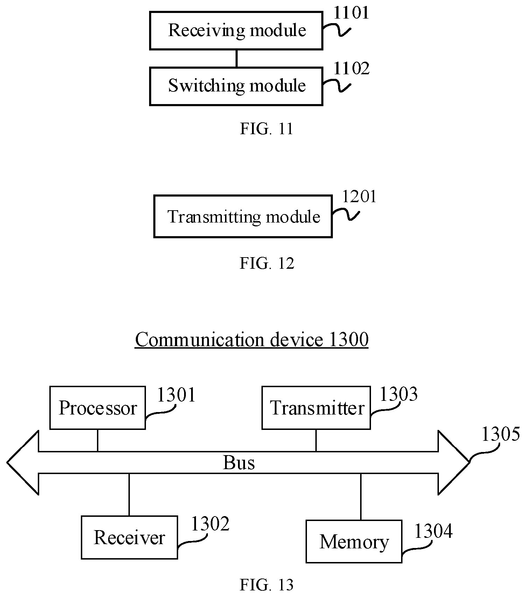

FIG. 11 is a block diagram of a downlink signal monitoring apparatus provided by an exemplary embodiment of the present application. The apparatus may be implemented as a terminal or a portion of terminal via software, hardware, or a combination of both. The apparatus includes:
a receiving module 1101, configured to monitor a downlink signal on a first search space and/or a first SSSG of a serving cell of a terminal in response to switching from a first monitoring state to a second monitoring state.

The terminal is in an RRC connected state. Power consumption of the terminal during monitoring in the first monitoring state is lower than power consumption of the terminal during monitoring in the second monitoring state.

In some embodiments, the signal monitored in the first monitoring state is different from the signal monitored in the second monitoring state. For example, the first monitoring state is used to monitor a wake-up signal, while the second monitoring state is used to monitor a downlink signal.

In some embodiments, power consumption of a receiver used in the first monitoring state is lower than power consumption of a receiver used in the second monitoring state. The receiver used in the first monitoring state may be the same as or different from the receiver used in the second monitoring state. For example, a first receiver of the terminal is used in the first monitoring state, while a second receiver of the terminal is used in the second monitoring state, where the power consumption of the first receiver during monitoring is lower than the power consumption of the second receiver during monitoring during monitoring. Alternatively, the same receiver of the terminal is used in the first monitoring state and the second monitoring state, and the power consumption of the receiver during monitoring in the first monitoring state is lower than that in the second monitoring state.

In some embodiments, the first monitoring state includes a low-power reception state (low-power receiver state). In some embodiments, the second monitoring state includes an MR PDCCH monitoring state. In some embodiments, the downlink signal includes a PDCCH. In some embodiments, the MR PDCCH monitoring state includes the situation where a wake-up signal is received, and then the terminal wakes up the main radio to monitor the PDCCH.

In some embodiments, the apparatus further includes a switching module 1102, configured to switch from the first monitoring state to the second monitoring state in a case where the terminal is in the first monitoring state and receives a wake-up signal. The wake-up signal is used to trigger the terminal to switch from the first monitoring state to the second monitoring state. Correspondingly, the terminal may further switch from the second monitoring state to the first monitoring state. In some embodiments, the wake-up signal includes at least one of an LP-WUS or an ultra-low power WUS.

In some embodiments, the serving cell of the terminal includes at least one of an SpCell or an SCell.

In some embodiments, the terminal is configured with multiple search spaces and/or SSSGs. The first search space and the first SSSG are used to indicate the resources used by the terminal to monitor the downlink signal. In some embodiments, the first search space is used to indicate a search space for the terminal to monitor PDCCH in response to switching from a low-power reception state to an MR PDCCH monitoring state. The first SSSG is used to indicate an SSSG for the terminal to monitor PDCCH in response to switching from a low-power reception state to an MR PDCCH monitoring state.

In some embodiments, the first search space and/or the first SSSG are configured by a network device. In some embodiments, the first search space and/or the first SSSG are agreed upon by a protocol. In some embodiments, the first search space is determined based on a second search space, and/or the first SSSG is determined based on a second SSSG. In some embodiments, the configuration methods for the first search space and the first SSSG are the same or different.

### Regarding a case of configured by a network device:

In some embodiments, the first search space and/or the first SSSG are configured on one or more bandwidth parts (BWPs) of each serving cell of the terminal. That is, for one or more BWPs corresponding to each serving cell of the terminal, the first search space and/or the first SSSG may be configured.

In some embodiments, the first search space and/or the first SSSG are configured on one or more BWPs of one or more serving cells of the terminal. The one or more serving cells are all serving cells of the terminal or a part of serving cells of the terminal. That is, for all or part of the serving cells of the terminal, the first search space and/or the first SSSG may be configured on one or more BWPs corresponding to each serving cell.

In some embodiments, the first search space includes one or more search spaces. For example, the first search space includes search space identifier (ID) 1, or the first search space includes search space ID 1 and search space ID 2. In some embodiments, the first SSSG includes one or more SSSGs. For example, the first SSSG includes SSSG index 1, or the first SSSG includes SSSG index 1 and SSSG index 2.

In some embodiments, the receiving module 1101 is configured to receive configuration information transmitted by a network device, where the configuration information is used to configure the first search space and/or the first SSSG. In some embodiments, the configuration information includes at least one of dedicated signaling for the terminal or a system message.

In some embodiments, the dedicated signaling includes at least one of RRC signaling, a medium access control control element (MAC CE), or a PDCCH. In some embodiments, the RRC signaling includes at least one of an RRC reconfiguration message, an RRC resume message, or an RRC setup message.

In some embodiments, the receiving module 1101 is configured to monitor, according to the first search space and/or the first SSSG, the downlink signal on one BWP of each serving cell of the terminal. For example, when a terminal in an RRC connected state switches from a low-power reception state to an MR PDCCH monitoring state, for each serving cell, the terminal monitors PDCCH on one BWP according to the first search space and/or the first SSSG.

### Regarding a case of agreed upon by a protocol:

In some embodiments, the receiving module 1101 is configured to monitor, according to the first search space and/or the first SSSG, the downlink signal on one BWP of each serving cell of the terminal. For example, when a terminal in an RRC connected state switches from a low-power reception state to an MR PDCCH monitoring state, for each serving cell, the terminal monitors PDCCH on one BWP according to the first search space and/or the first SSSG. The first search space and/or the first SSSG used by the terminal to monitor the downlink signal are agreed upon by a protocol.

In some embodiments, the BWP includes at least one of an active BWP, an initial BWP, or a default BWP.

In some embodiments, the first search space used by the terminal to monitor the downlink signal includes at least one of all search spaces configured for the terminal or a part of search spaces configured for the terminal. The part of search spaces includes one or more search spaces. For example, the first search space includes search space ID 1 among all search spaces configured for the terminal. Alternatively, the first search space includes search space ID 1 and search space ID 2 among all search spaces configured for the terminal.

In some embodiments, the first SSSG used by the terminal to monitor the downlink signal includes at least one of all SSSGs configured for the terminal or a part of SSSGs configured for the terminal. The part of SSSGs includes one or more SSSGs. For example, the first SSSG includes SSSG index 0 among all SSSGs configured for the terminal. Alternatively, the first SSSG includes SSSG index 0 and SSSG index 1 among all SSSGs configured for the terminal.

### Regarding a case of determined based on the second search space and/or the second SSSG:

In some embodiments, the receiving module 1101 is configured to monitor, according to the first search space and/or the first SSSG, the downlink signal on one BWP of each serving cell of the terminal. For example, when a terminal in an RRC connected state switches from a low-power reception state to an MR PDCCH monitoring state, for each serving cell, the terminal monitors PDCCH on one BWP according to the first search space and/or the first SSSG. The first search space and/or the first SSSG used by the terminal to monitor the downlink signal are determined based on the second search space and/or second SSSG.

In some embodiments, the first search space is the same as the second search space. In some embodiments, the first SSSG is the same as the second SSSG.

In some embodiments, the second search space includes a search space on which the terminal monitors a downlink signal before switching to the second monitoring state. In some embodiments, the second search space includes a search space on which the terminal most recently or last monitored a downlink signal before switching to the second monitoring state. In some embodiments, the second SSSG includes an SSSG on which the terminal monitors a downlink signal before switching to the second monitoring state. In some embodiments, the second SSSG includes an SSSG on which the terminal most recently or last monitored a downlink signal before switching to the second monitoring state.

In some embodiments, the second search space includes a search space on which the terminal monitors a downlink signal before receiving the wake-up signal. In some embodiments, the second search space includes a search space on which the terminal most recently or last monitored a downlink signal before receiving the wake-up signal. In some embodiments, the second SSSG includes an SSSG on which the terminal monitors a downlink signal before receiving the wake-up signal. In some embodiments, the second SSSG includes an SSSG on which the terminal most recently or last monitored a downlink signal before receiving the wake-up signal.

In some embodiments, the second search space includes a search space on which the terminal monitors a downlink signal before entering the first monitoring state. In some embodiments, the second search space includes a search space on which the terminal most recently or last monitored a downlink signal before entering the first monitoring state. In some embodiments, the second SSSG includes an SSSG on which the terminal monitors a downlink signal before entering the first monitoring state. In some embodiments, the second SSSG includes an SSSG on which the terminal most recently or last monitored a downlink signal before entering the first monitoring state. In some embodiments, the first monitoring state may be referred to as/equivalent to/replaced by an LP-WUS monitoring state.

In summary, the apparatus provided by the embodiments specifies that for the terminal in the RRC connected state, in response to switching from the first monitoring state to the second monitoring state with higher power consumption, the terminal may monitor the downlink signal on the first search space and/or the first SSSG of a serving cell, thereby clarifying the resources used by the terminal to monitor the downlink signal (e.g., PDCCH). This helps ensure that the terminal and the network device maintain a consistent understanding of the monitoring behavior for the downlink signal, to avoid the terminal from missing the downlink signal transmitted by the network device, and also avoid unnecessary resource overhead caused by the network device transmitting the downlink signal on resources not monitored by the terminal.

FIG. 12 is a block diagram of a downlink signal transmitting apparatus provided by an exemplary embodiment of the present application. The apparatus may be implemented as a network device or as a portion of network device via software, hardware, or a combination of both. The apparatus includes:
a transmitting module 1201, configured to transmit a downlink signal on a first search space and/or a first SSSG of a serving cell of a terminal in response to the terminal switching from the first monitoring state to the second monitoring state.

The terminal is in an RRC connected state. The first search space and/or the first SSSG are used by the terminal to monitor the downlink signal. Power consumption of the terminal during monitoring in the first monitoring state is lower than power consumption of the terminal during monitoring in the second monitoring state.

In some embodiments, a signal monitored in the first monitoring state is different from a signal monitored in second monitoring state. For example, the first monitoring state is used to monitor a wake-up signal, while the second monitoring state is used to monitor a downlink signal.

In some embodiments, power consumption of a receiver used in the first monitoring state is lower than power consumption of a receiver used in the second monitoring state. The receiver used in the first monitoring state may be the same as or different from the receiver used in the second monitoring state.

In some embodiments, the first monitoring state includes a low-power reception state (low-power receiver state). In some embodiments, the second monitoring state includes an MR PDCCH monitoring state. In some embodiments, the downlink signal includes a PDCCH. In some embodiments, the MR PDCCH monitoring state includes the situation where a wake-up signal is received, and then the terminal wakes up the main radio to monitor the PDCCH.

In some embodiments, the transmitting module 1201 is configured to transmit a wake-up signal to a terminal which is in the first monitoring state. In a case where the terminal is in the first monitoring state and receives the wake-up signal, the terminal switches from the first monitoring state to the second monitoring state. The wake-up signal is used to trigger the terminal to switch from the first monitoring state to the second monitoring state. Correspondingly, the terminal may further switch from the second monitoring state to the first monitoring state. In some embodiments, the wake-up signal includes at least one of an LP-WUS or an ultra-low power WUS.

In some embodiments, the serving cell of the terminal includes at least one of an SpCell or an SCell.

In some embodiments, the terminal is configured with multiple search spaces and/or SSSGs. The first search space and the first SSSG are used to indicate resources used by the terminal to monitor the downlink signal. In some embodiments, the first search space is used to indicate a search space for the terminal to monitor PDCCH in response to switching from a low-power reception state to an MR PDCCH monitoring state. The first SSSG is used to indicate an SSSG for the terminal to monitor PDCCH in response to switching from the low-power reception state to the MR PDCCH monitoring state.

In some embodiments, the first search space and/or the first SSSG are configured by a network device. In some embodiments, the first search space and/or the first SSSG are agreed upon by a protocol. In some embodiments, the first search space is determined based on a second search space, and/or the first SSSG is determined based on a second SSSG. In some embodiments, the configuration methods for the first search space and the first SSSG are the same or different.

### Regarding a case of configured by a network device:

In some embodiments, the first search space and/or the first SSSG are configured on one or more BWPs of each serving cell of the terminal. That is, for one or more BWPs corresponding to each serving cell of the terminal, the first search space and/or the first SSSG may be configured.

In some embodiments, the first search space and/or the first SSSG are configured on one or more BWPs of one or more serving cells of the terminal. The one or more serving cells are all serving cells of the terminal or a part of serving cells of the terminal. That is, for all or part of the serving cells of the terminal, the first search space and/or the first SSSG may be configured on one or more BWPs corresponding to each serving cell.

In some embodiments, the first search space includes one or more search spaces. In some embodiments, the first SSSG includes one or more SSSGs.

In some embodiments, the transmitting module 1201 is configured to transmit configuration information to the terminal, where the configuration information is used to configure the first search space and/or the first SSSG. In some embodiments, the configuration information includes at least one of dedicated signaling for the terminal or a system message.

In some embodiments, the dedicated signaling includes at least one of RRC signaling, a MAC CE, or a PDCCH. In some embodiments, the RRC signaling includes at least one of an RRC reconfiguration message, an RRC resume message, or an RRC setup message.

In some embodiments, the transmitting module 1201 is configured to transmit, according to a first search space and/or a first SSSG, the downlink signal on one BWP of each serving cell of the terminal. On one BWP of each serving cell of the terminal, the terminal monitors the downlink signal according to the first search space and/or the first SSSG. For example, when a terminal in an RRC connected state switches from a low-power reception state to an MR PDCCH monitoring state, for each serving cell, the terminal monitors the PDCCH on one BWP according to the first search space and/or the first SSSG.

### Regarding a case of agreed upon by a protocol:

In some embodiments, the transmitting module 1201 is configured to transmit, according to the first search space and/or the first SSSG, the downlink signal on one BWP of each serving cell of the terminal. On one BWP of each serving cell of the terminal, the terminal monitors the downlink signal according to the first search space and/or the first SSSG. For example, when a terminal in an RRC connected state switches from a low-power reception state to an MR PDCCH monitoring state, for each serving cell, the terminal monitors the PDCCH on one BWP according to the first search space and/or the first SSSG. The first search space and/or the first SSSG used by the terminal to monitor the downlink signal are agreed upon by a protocol.

In some embodiments, the BWP includes at least one of an active BWP, an initial BWP, or a default BWP.

In some embodiments, the first search space used by the terminal to monitor the downlink signal includes at least one of all search spaces configured for the terminal or a part of search spaces configured for the terminal. The part of search spaces includes one or more search spaces.

In some embodiments, the first SSSG used by the terminal to monitor the downlink signal includes at least one of all SSSGs configured for the terminal or a part of SSSGs configured for the terminal. The part of SSSGs includes one or more SSSGs

### Regarding a case of determined based on the second search space and/or the second SSSG:

In some embodiments, the transmiting module 1201 is configured to transmit, according to the first search space and/or the first SSSG, the downlink signal on one BWP of each serving cell of the terminal. On one BWP of each serving cell of the terminal, the terminal monitors the downlink signal according to the first search space and/or the first SSSG. For example, when a terminal in an RRC connected state switches from a low-power reception state to an MR PDCCH monitoring state, for each serving cell, the terminal monitors the PDCCH on one BWP according to the first search space and/or the first SSSG. The first search space and/or the first SSSG used by the terminal to monitor the downlink signal are determined based on the second search space and/or second SSSG.

In some embodiments, the first search space is the same as the second search space. In some embodiments, the first SSSG is the same as the second SSSG.

In some embodiments, the second search space includes a search space on which the terminal monitors a downlink signal before switching to the second monitoring state. In some embodiments, the second search space includes a search space on which the terminal most recently or last monitored a downlink signal before switching to the second monitoring state. In some embodiments, the second SSSG includes an SSSG on which the terminal monitors a downlink signal before switching to the second monitoring state. In some embodiments, the second SSSG includes an SSSG on which the terminal most recently or last monitored a downlink signal before switching to the second monitoring state.

In some embodiments, the second search space includes a search space on which the terminal monitors a downlink signal before receiving the wake-up signal. In some embodiments, the second search space includes a search space on which the terminal most recently or last monitored a downlink signal before receiving the wake-up signal. In some embodiments, the second SSSG includes an SSSG on which the terminal monitors a downlink signal before receiving the wake-up signal. In some embodiments, the second SSSG includes an SSSG on which the terminal most recently or last monitored a downlink signal before receiving the wake-up signal.

In some embodiments, the second search space includes a search space on which the terminal monitors a downlink signal before entering the first monitoring state. In some embodiments, the second search space includes a search space on which the terminal most recently or last monitored a downlink signal before entering the first monitoring state. In some embodiments, the second SSSG includes an SSSG on which the terminal monitors a downlink signal before entering the first monitoring state. In some embodiments, the second SSSG includes an SSSG on which the terminal most recently or last monitored a downlink signal before entering the first monitoring state. In some embodiments, the first monitoring state may be referred to as/equivalent to/replaced by an LP-WUS monitoring state.

In summary, the apparatus provided by the embodiments specifies that for the terminal in the RRC connected state, in response to the terminal switching from the first monitoring state to the second monitoring state with higher power consumption, the network transmits the downlink signal on the first search space and/or the first SSSG of the serving cell of the terminal, and the terminal may monitor the downlink signal on the first search space and/or the first SSSG of the serving cell, thereby clarifying the resources used by the terminal to monitor the downlink signal (e.g., PDCCH). This helps ensure that the terminal and the network device maintain a consistent understanding of the monitoring behavior of the downlink signal, to avoid the terminal from missing the downlink signals transmitted by the network device, and also avoid unnecessary resource overhead caused by the network device transmitting the downlink signal on resources not monitored by the terminal.

It should be noted that, when the apparatuses provided in the above embodiments implement their functions, the division of functional modules is only used as an example. In practical applications, the above functions can be allocated to different functional modules as needed. That is, the internal structure of the device can be divided into different functional modules to perform all or part of the functions described above.

Regarding the apparatuses in the above embodiments, the specific operations performed by each module have been described in detail in the embodiments related to the methods, which will not be elaborated here.

FIG. 13 is a structural schematic diagram of a communication device (terminal/network device) provided by an exemplary embodiment of the present application. The communication device 1300 includes: a processor 1301, a receiver 1302, a transmitter 1303, a memory 1304, and a bus 1305.

The processor 1301 includes one or more processing cores. The processor 1301 executes software programs and modules, to perform various functional applications and information processing.

The receiver 1302 and transmitter 1303 may be implemented as a single communication component, which may be a communication chip.

The memory 1304 is connected to the processor 1301 via the bus 1305. The memory 1304 may be configured to store at least one instruction, and the processor 1301 is configured to execute the at least one instruction, to perform the steps in the above method embodiments.

Furthermore, the memory 1304 may be implemented by any type of a volatile or a non-volatile storage device or a combination thereof, including but not limited to: a magnetic disk or an optical disk, an electrically erasable programmable read only memory (EEPROM), an erasable programmable read-only memory (EPROM), a static random-access memory (SRAM), a read-only memory (ROM), a magnetic memory, a flash memory, and a programmable read-only memory (PROM).

When the communication device is implemented as a terminal, the processor and transceiver in the communication device described in the embodiments of the present application may be integrated into a single communication chip, or the transceiver may form a separate communication chip. The transmitter in the transceiver performs the transmitting steps executed by the terminal in any one of the above methods, the receiver in the transceiver performs the receiving steps executed by the terminal in any one of the above methods, and the processor performs steps other than the transmitting and receiving steps, which will not be repeated here.

When the communication device is implemented as a network device, the processor and transceiver in the communication device described in the embodiments of the present application may be integrated into a single communication chip, or the transceiver may form a separate communication chip. The transmitter in the transceiver performs the transmitting steps executed by the network device in any one of the above methods, the receiver in the transceiver performs the receiving steps executed by the network device in one of the above methods, and the processor performs steps other than the transmitting and receiving steps, which will not be repeated here.

In an exemplary embodiment, a computer-readable storage medium is further provided. The computer-readable storage medium stores at least one instruction, at least one program, a code set, or an instruction set. The at least one instruction, the at least one program, the code set, or the instruction set is loaded and executed by a processor to perform the downlink signal monitoring method or the downlink signal transmitting method provided in the various method embodiments described above.

In an exemplary embodiment, a chip is further provided. The chip includes a programmable logic circuitry and/or program instructions. When the chip is executed on a communication device, the chip is configured to, based on the programmable logic circuitry and/or the program instructions, perform the downlink signal monitoring method or downlink signal transmitting method provided by the method embodiments described above.

In an exemplary embodiment, a computer program product is further provided. When the computer program product is executed on a processor of a computer device, it enables the computer device to perform the downlink signal monitoring method or downlink signal transmitting method described above.

Those skilled in the art should appreciate that, in the above one or more examples, the functions described in the embodiments of the present application may be implemented in hardware, software, firmware, or any combination thereof. When implemented in software, these functions may be stored in a computer-readable medium or transmitted as one or more instructions or codes in the computer-readable medium. The computer-readable medium includes a computer storage medium and a communication medium, where the communication medium includes any medium that facilitates the transmission of a computer program from one place to another. A storage medium may be any available medium that can be accessed by a general-purpose or special-purpose computer.

The above descriptions are merely exemplary embodiments of the present application and are not intended to limit the present application. Any modification, equivalent replacement, improvement made within the spirit and principles of the present application should be all covered within the protection scope of the present application.

## Claims

1. A downlink signal monitoring method, performed by a terminal and comprising:
in response to switching from a first monitoring state to a second monitoring state, monitoring a downlink signal on a first search space and/or a first search space set group (SSSG) of a serving cell of the terminal;
wherein the terminal is in a radio resource control (RRC) connected state, and power consumption of the first monitoring state is lower than power consumption of the second monitoring state.

2. The method according to claim 1, wherein the first search space and/or the first SSSG are configured by a network device.

3. The method according to claim 2, wherein the first search space and/or the first SSSG are configured on one or more bandwidth parts (BWPs) of each serving cell of the terminal.

4. The method according to claim 2 or 3, wherein the first search space and/or the first SSSG are configured on one or more BWPs of one or more serving cells of the terminal.

5. The method according to any one of claims 2 to 4, wherein the first search space comprises one or more search spaces, and/or the first SSSG comprises one or more SSSGs.

6. The method according to any one of claims 2 to 5, wherein the method further comprises:
receiving configuration information transmitted by the network device;
wherein the configuration information is used to configure the first search space and/or the first SSSG, and the configuration information comprises at least one of dedicated signaling for the terminal or a system message.

7. The method according to claim 6, wherein the dedicated signaling comprises at least one of RRC signaling, a media access control control element (MAC CE), or a physical downlink control channel (PDCCH).

8. The method according to claim 7, wherein the RRC signaling comprises at least one of an RRC reconfiguration message, an RRC resume message, or an RRC setup message.

9. The method according to any one of claims 2 to 8, wherein monitoring the downlink signal on the first search space and/or the first SSSG of the serving cell of the terminal comprises:
monitoring, according to the first search space and/or the first SSSG, the downlink signal on one BWP of each serving cell of the terminal.

10. The method according to any one of claims 1 to 9, wherein the first search space and/or the first SSSG are agreed upon by a protocol.

11. The method according to claim 10, wherein monitoring the downlink signal on the first search space and/or the first SSSG of the serving cell of the terminal comprises:
monitoring, according to the first search space and/or the first SSSG, the downlink signal on one BWP of each serving cell of the terminal.

12. The method according to any one of claims 1 to 11, wherein the first search space is determined based on a second search space, and/or the first SSSG is determined based on a second SSSG.

13. The method according to claim 12, wherein monitoring the downlink signal on the first search space and/or the first SSSG of the serving cell of the terminal comprises:
monitoring, according to the first search space and/or the first SSSG, the downlink signal on one BWP of each serving cell of the terminal.

14. The method according to claim 12 or 13, wherein the first search space is the same as the second search space, and/or the first SSSG is the same as the second SSSG.

15. The method according to any one of claims 12 to 14, wherein the second search space comprises a search space on which the terminal monitors a downlink signal before switching to the second monitoring state, and/or the second SSSG comprises an SSSG on which the terminal monitors a downlink signal before switching to the second monitoring state.

16. The method according to any one of claims 12 to 15, wherein the second search space comprises a search space on which the terminal monitors a downlink signal before receiving a wake-up signal, and/or the second SSSG comprises an SSSG on which the terminal monitors a downlink signal before receiving a wake-up signal.

17. The method according to any one of claims 12 to 16, wherein the second search space comprises a search space on which the terminal monitors a downlink signal before entering the first monitoring state, and/or the second SSSG comprises an SSSG on which the terminal monitors a downlink signal before entering the first monitoring state.

18. The method according to any one of claims 1 to 17, wherein the method further comprises:
in a case where the terminal is in the first monitoring state and receives a wake-up signal, switching from the first monitoring state to the second monitoring state.

19. The method according to any one of claims 1 to 18, wherein power consumption of a receiver used in the first monitoring state is lower than power consumption of a receiver used in the second monitoring state.

20. The method according to any one of claims 1 to 19, wherein the first monitoring state comprises a low-power reception state, and the second monitoring state comprises a main radio (MR) PDCCH monitoring state.

21. The method according to any one of claims 1 to 20, wherein the downlink signal comprises a PDCCH.

22. A downlink signal transmitting method, performed by a network device and comprising:
in response to a terminal switching from a first monitoring state to a second monitoring state, transmitting a downlink signal on a first search space and/or a first search space set group (SSSG) of a serving cell of the terminal;
wherein the terminal is in a radio resource control (RRC) connected state, the first search space and/or the first SSSG are used by the terminal to monitor the downlink signal, and power consumption of the first monitoring state is lower than power consumption of the second monitoring state.

23. The method according to claim 22, wherein the first search space and/or the first SSSG are configured by the network device.

24. The method according to claim 23, wherein the first search space and/or the first SSSG are configured on one or more bandwidth parts (BWPs) of each serving cell of the terminal.

25. The method according to claim 23 or 24, wherein the first search space and/or the first SSSG are configured on one or more BWPs of one or more serving cells of the terminal.

26. The method according to any one of claims 23 to 25, wherein the first search space comprises one or more search spaces, and/or the first SSSG comprises one or more SSSGs.

27. The method according to any one of claims 23 to 26, wherein the method further comprises:
transmitting configuration information to the terminal;
wherein the configuration information is used to configure the first search space and/or the first SSSG, and the configuration information comprises at least one of dedicated signaling for the terminal or a system message.

28. The method according to claim 27, wherein the dedicated signaling comprises at least one of RRC signaling, a media access control control element (MAC CE), or a physical downlink control channel (PDCCH).

29. The method according to claim 28, wherein the RRC signaling comprises at least one of an RRC reconfiguration message, an RRC resume message, or an RRC setup message.

30. The method according to any one of claims 23 to 29, wherein transmitting the downlink signal on the first search space and/or the first SSSG of the serving cell of the terminal comprises:
transmitting, according to the first search space and/or the first SSSG, the downlink signal on one BWP of each serving cell of the terminal.

31. The method according to any one of claims 22 to 30, wherein the first search space and/or the first SSSG are agreed upon by a protocol.

32. The method according to claim 31, wherein transmitting the downlink signal on the first search space and/or the first SSSG of the serving cell of the terminal comprises:
transmitting, according to the first search space and/or the first SSSG, the downlink signal on one BWP of each serving cell of the terminal.

33. The method according to any one of claims 22 to 32, wherein the first search space is determined based on a second search space, and/or the first SSSG is determined based on a second SSSG.

34. The method according to claim 33, wherein the transmitting the downlink signal on the first search space and/or the first SSSG of the serving cell of the terminal comprises:
transmitting, according to the first search space and/or the first SSSG, the downlink signal on one BWP of each serving cell of the terminal.

35. The method according to claim 33 or 34, wherein the first search space is the same as the second search space, and/or the first SSSG is the same as the second SSSG.

36. The method according to any one of claims 33 to 35, wherein the second search space comprises a search space on which the terminal monitors a downlink signal before switching to the second monitoring state, and/or the second SSSG comprises an SSSG on which the terminal monitors a downlink signal before switching to the second monitoring state.

37. The method according to any one of claims 33 to 36, wherein the second search space comprises a search space on which the terminal monitors a downlink signal before receiving a wake-up signal, and/or the second SSSG comprises an SSSG on which the terminal monitors a downlink signal before receiving a wake-up signal.

38. The method according to any one of claims 33 to 37, wherein the second search space comprises a search space on which the terminal monitors a downlink signal before entering the first monitoring state, and/or the second SSSG comprises an SSSG on which the terminal monitors the downlink signal before entering the first monitoring state.

39. The method according to any one of claims 22 to 38, wherein the method further comprises:
transmitting a wake-up signal to the terminal which is in the first monitoring state;
wherein the wake-up signal is used to indicate that the terminal switches from the first monitoring state to the second monitoring state.

40. The method according to any one of claims 22 to 39, wherein power consumption of a receiver used in the first monitoring state is lower than power consumption of a receiver used in the second monitoring state.

41. The method according to any one of claims 22 to 40, wherein the first monitoring state comprises a low-power reception state, and the second monitoring state comprises a main radio (MR) PDCCH monitoring state.

42. The method according to any one of claims 22 to 41, wherein the downlink signal comprises a PDCCH.

43. A downlink signal monitoring apparatus, comprising:
a receiving module, configured to monitor a downlink signal on a first search space and/or a first search space set group (SSSG) of a serving cell of a terminal in response to switching from a first monitoring state to a second monitoring state;
wherein the terminal is in a radio resource control (RRC) connected state, and power consumption of the first monitoring state is lower than power consumption of the second monitoring state.

44. A downlink signal transmitting apparatus, comprising:
a transmitting module, configured to transmit a downlink signal on a first search space and/or a first search space set group (SSSG) of a serving cell of a terminal in response to the terminal switching from a first monitoring state to a second monitoring state;
wherein the terminal is in an RRC connected state, the first search space and/or the first SSSG are used by the terminal to monitor the downlink signal, and power consumption of the first monitoring state is lower than power consumption of the second monitoring state.

45. A terminal, comprising:
a processor;
a transceiver connected to the processor;
a memory configured to store executable instructions of the processor;
wherein the terminal is configured to load the executable instructions, to enable the terminal to perform the downlink signal monitoring method according to any one of claims 1 to 21.

46. A network device, comprising:
a processor;
a transceiver connected to the processor;
a memory configured to store executable instructions of the processor;
wherein the network device is configured to load the executable instructions, to enable the network device to perform the downlink signal transmitting method according to any one of claims 22 to 42.

47. A computer-readable storage medium, having executable instructions stored thereon, wherein when the executable instructions are loaded and executed by a processor, the downlink signal monitoring method according to any one of claims 1 to 21 is implemented, or the downlink signal transmitting method according to any one of claims 22 to 42 is implemented.

48. A chip, comprising programmable logic circuitry or program, wherein the chip is configured to, based on the programmable logic circuitry or program, perform the downlink signal monitoring method according to any one of claims 1 to 21, or the downlink signal transmitting method according to any one of claims 22 to 42.

49. A computer program product, comprising computer instructions, wherein the computer instructions are stored on a computer-readable storage medium, when the computer instructions are read by a processor of a computer device from the computer-readable storage medium, the processor executes the computer instructions, to enable the computer device to perform the downlink signal monitoring method according to any one of claims 1 to 21, or the downlink signal transmitting method according to any one of claims 22 to 42.
